# EUROPEAN PATENT SPECIFICATION

(11) **EP 3 427 502 B1**
(45) Date of publication and mention of the grant of the patent: **15.01.2020**
(21) Application number: 16893716.7
(22) Date of filing: 09.03.2016
(51) Int. Cl.: H04W 12/04, H04W 12/06, H04W 12/00, H04W 8/18

(54) **METHODS PROVIDING SERVICE LIMITATION AND RELATED COMMUNICATION DEVICE AND NETWORK NODE**
VERFAHREN ZUR BEREITSTELLUNG VON DIENSTBEGRENZUNG SOWIE ZUGEHÖRIGE KOMMUNIKATIONSVORRICHTUNG UND NETZWERKKNOTEN
PROCÉDÉS FOURNISSANT UNE LIMITATION DE SERVICE ET DISPOSITIF DE COMMUNICATION ET NOEUD DE RÉSEAU CORRESPONDANTS

(43) Date of publication of application: 16.01.2019
(73) Proprietor: Telefonaktiebolaget LM Ericsson (PUBL), 164 83 Stockholm (SE)
(72) Inventor: LINDHEIMER, Christofer, 583 36 Linköping (SE); RUNE, Göran, 582 52 Linköping (SE); TOUATI, Samy, Pleasanton, CA 94566 (US)
(74) Representative: Ericsson
(86) International application number: PCT/SE2016/050185
(87) International publication number: WO 2017/155434

(56) References cited:
- EP-A1- 2 741 459
- EP-A1- 2 955 940
- WO-A1-2013/171648
- WO-A1-2016/010760
- WO-A1-2016/010760
- WO-A2-2011/047276
- US-A1- 2016 014 601

## Description

### TECHNICAL FIELD

The present invention generally relates to communications, and more particularly, to network communications and related methods, devices, and network nodes.

### BACKGROUND

In Internet of things (IoT) applications, there may be a need to manage device connectivity to a larger extent than what has been the case previously. Connectivity has generally been managed either through WLAN (Wireless Local Area Network) access points to a fixed access at home, or through connectivity via a mobile cellular subscription to a PLMN (Public Land Mobile Network). In identifying a device in a cellular domain, a SIM (Subscriber Identity Module) card may be used in a device wherein the SIM card provides a cellular identity and a basis for authentication. Use of SIM cards is relatively straight-forward when the number of devices to be managed that have or require internet connectivity is relatively limited in number. In the coming IoT era however, the number of connected devices may drastically increase, and SIM solutions of today may become less feasible.

Partially in response to the coming IoT era, and for other reasons, use of embedded SIMs in the industry is increasing. Embedded SIMs are non-detachable SIMs that may be, for example, soldered in/on a device/chip. One advantage with embedded SIMs is that they may be used to simplify the process where the operator is the center point of provisioning, and instead provisioning of an embedded SIM may be provided after the embedded SIM is "distributed" (i.e., the embedded SIM may come with the device).

Also, other types of credentials (e.g., software based credentials such as soft-SIM's) may be considered. These other types of credentials may include SIMs that are realized through software, rather than through a physical entity such as a SIM card. These software based SIMs may make it possible, for example, to create and load different credentials from different operator authenticators. In some cases, a SIM may be changed to enable access to various PLMNs (Public Land Mobile Networks).

Known methods of providing credentials may not provide efficient solutions as increasing numbers of devices are used by a single user. The document WO2016/010760 A1 discloses a user equipment (UE) may obtain identification information for a device and may assist in establishing credentials by which the device accesses a wireless network. For example, the device may lack a smart card or UICC that stores credentials for accessing a cellular network. To help the device gain access, the UE may establish a connection with the wireless network using its own credentials, and register the device to access the wireless network with a network credential for the device that is different from the UE's own credentials.

### SUMMARY

According to some embodiments of inventive concepts, a method of operating a network node in a communication network may include receiving a request from a first communication device (also referred to as a primary communication device). The request may be to associate a second communication device (also referred to as a secondary communication device), and the request may include an identification for the second communication device. A definition of a service limitation for the second communication device may be received from the first communication device, and a network access credential may be provided for the second communication device in response to the request from the first communication device. Moreover, communication may be provided for the second communication device in accordance with the definition for the service limitation using the network access credential.

A network access credential is a unique identification that may be associated with a particular communication device. The network access credential may be used by the associated communication device to gain access to a communication network, and the network access credential may be used by the communication network to allow/deny network access for the associated communication device. A service limitation may define a restriction or restrictions regarding how, when, and/or where second communication device is able to use the network. A definition of a service limitation may be any identifier (e.g., index, text/number string, code, etc.) used to identify a particular service limitation in communications between different devices/nodes.

The definition of the service limitation may include at least one of a definition of a geographic service limitation, a definition of a data rate service limitation, a definition of a time of use service limitation, a definition of a data use service limitation, a definition of a network access service limitation, and/or a definition of a service type service limitation.

Responsive to communication usage of the second communication device triggering a notification threshold relative to the definition of the service limitation, a notification may be transmitted to the first communication device. Moreover, a definition of the notification threshold may be received from the first communication device before transmitting the notification, receiving.

The definition of the service limitation may be a definition of a first service limitation. After receiving the definition of the first service limitation and after providing communication for the second communication device in accordance with the definition of the first service limitation, the method may further include receiving a definition of a second service limitation for the second communication device. The definition of the second service limitation may be received from the first communication device. After receiving the definition of the second service limitation, communication for the second communication device may be provided in accordance with the definition of the second service limitation using the network access credential.

The network access credential for the second communication device may include a Subscriber Identity Module (SIM) credential.

The network access credential for the second communication device may include a virtual International Mobile Subscriber Identity (vIMSI).

The network access credential for the second communication device may include a non-SIM credential.

The request may further include a network access credential for the first communication device. The network access credential for the first communication device may include a Subscriber Identity Module (SIM) credential.

According to some other embodiments of inventive concepts, a method of operating a first communication device in a communication network may include transmitting a request to the communication network. The request may be a request to associate a second communication device, and the request may include an identification for the second communication device. A definition of a service limitation for the second communication device may be transmitted from the first communication device to the communication network.

The definition of the service limitation may include at least one of a definition of a geographic service limitation, a definition of a data rate service limitation, a definition of a time of use service limitation, a definition of a data use service limitation, a definition of a network access service limitation, and/or a definition of a service type service limitation.

A notification may be received from the communication network, and the notification may indicate usage of the second communication device exceeding a notification threshold relative to the definition of the service limitation. Before receiving the notification, a definition of the notification threshold may be transmitted from the first communication device to the communication network.

The definition of the service limitation may be a definition of a first service limitation. In addition, a definition of a second service limitation for the second communication device may be transmitted to the communication network after transmitting the definition of the first service limitation.

The request may further include a network access credential for the first communication device. The network access credential for the first communication device may include a Subscriber Identity Module (SIM) credential.

Before transmitting the request, the identification for the second communication device may be received from the second communication device. After transmitting the request, a one-time-use access token may be received from the communication network. The one-time-use access token may be provided to the second communications device.

According to still other embodiments of inventive concepts, a node of a communication network may include a network interface configured to provide communications through a radio access network with wireless communication devices, and a processor coupled with the network interface. The processor may be configured to receive a request from a first communication device through the network interface. The request may be to associate a second communication device, and the request may include an identification for the second communication device. The processor may also be configured to receive a definition of a service limitation for the second communication device, and the definition of the service limitation may be received from the first communication device through the network interface. The processor may be further configured to provide a network access credential for the second communication device through the network interface in response to the request from the first communication device, and to provide communication for the second communication device in accordance with the definition of the service limitation using the network access credential.

According to yet other embodiments of inventive concepts, a node of a communication network may include a request receiving module for receiving a request from a first communication device. The request may be to associate a second communication device, and the request may include an identification for the second communication device. The node may further include a definition receiving module for receiving a definition of a service limitation for the second communication device, and the definition of the service limitation may be received from the first communication device. The node may also include a network access credential provisioning module for providing a network access credential for the second communication device in response to the request from the first communication device, and a communication module for providing communication for the second communication device in accordance with the definition of the service limitation using the network access credential.

According to more embodiments of inventive concepts, a node of a communication network may be adapted to receive a request from a first communication device. The request may be to associate a second communication device, and the request may include an identification for the second communication device. The communication device may also be configured to receive a definition of a service limitation for the second communication device, and the definition of the service limitation may be received from the first communication device. The communication device may also be configured to provide a network access credential for the second communication device in response to the request from the first communication device, and to provide communication for the second communication device in accordance with the definition of the service limitation using the network access credential.

According to still more embodiments of inventive concepts, a first communication device may be adapted for operation in a communication network. The first communication device may include a communication interface configured to provide communications through a radio access network with the communication network, and a processor coupled with the network interface. The processor may be configured to transmit a request to the communication network through the communication interface. The request may be to associate a second communication device, and the request may include an identification for the second communication device. The processor may be further configured to transmit a definition of a service limitation for the second communication device. The definition of the service limitation may be transmitted from the first communication device to the communication network through the communication interface.

According to yet more embodiments of inventive concepts, a first communication device may be adapted for operation in a communication network. The first communication device may include a request transmitting module for transmitting a request to the communication network. The request may be to associate a second communication device, and the request may include an identification for the second communication device. The first communication device may also include a definition transmitting module for transmitting a definition of a service limitation for the second communication device. The definition of the service limitation may be transmitted from the first communication device to the communication network.

According to further embodiments of inventive concepts, a first communication device may be adapted for operation in a communication network. The first communication device may be adapted to transmit a request to the communication network, wherein the request is to associate a second communication device, and wherein the request includes an identification for the second communication device. A definition of a service limitation for the second communication device may be transmitted from the first communication device to the communication network.

According to some embodiments, a first communication device may be used to control operation of a second communication device. In addition, information regarding usage of the second communication device may be provided to the first communication device. The invention is defined by the subject matter of the appended independent claims, further refined by the dependent claims.

### BRIEF DESCRIPTION OF THE DRAWINGS

Figure 1 is a diagram illustrating interactions between a primary device, a secondary device, and a Security Entitlement Server to onboard the secondary device;
Figure 2 is a diagram illustrating secondary device retrieving its credentials using its one-time token;
Figure 3 is a message diagram illustrating device and network operations according to some embodiments of inventive concepts;
Figure 4 is a block diagram illustrating elements of a communication device according to some embodiments of inventive concepts;
Figure 5 is a block diagram illustrating elements of a SIM controller according to some embodiments of inventive concepts;
Figure 6 is a flow chart illustrating operations of a SIM controller according to some embodiments of inventive concepts;
Figure 7 is a flow chart illustrating operations of a primary communication device according to some embodiments of inventive concepts;
Figure 8 is a block diagram illustrating elements of a communication device according to some embodiments of inventive concepts; and
Figure 9 is a block diagram illustrating elements of a SIM controller according to some embodiments of inventive concepts.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

In enabling access for, e.g., IoT devices in an efficient way, one method is through a so-called Secure Entitlement Server, SES. The "Secure Entitlement Server" (SES) may work to further distribute credentials (which can be SIM based or non-SIM based) through network signaling. Such a solution may rely on building an association between a primary SIM device and one or more secondary non-SIM devices. The primary device uses its SIM (or other credential) to authenticate to the Secure Entitlement Server, and to start an on-boarding procedure to associate a secondary device. This association will indicate to the Secure Entitlement Server that credentials must be allocated to the secondary device.

The secondary device is then provided a one-time-use access token, (e.g., via Quick Response QR code, via Bluetooth, etc.) which can be used to retrieve credentials from the Secure Entitlement Server by the secondary device directly. This may provide a secure distribution of credentials to the secondary device.

In addition to allocating the credential to the secondary device, the Secure Entitlement Server may perform provisioning in the operator network for the secondary device, such as AAA (Authentication, Authorization, and Accounting) provisioning, HSS (Home Subscriber Server) provisioning, and/or IP (Internet Protocol) Multimedia Subsystem IMS Telephony Application Server configuration, if applicable. The nodes which are provisioned/configured by the Secure Entitlement Server may be conditioned on the services to be supported by the secondary device(s).

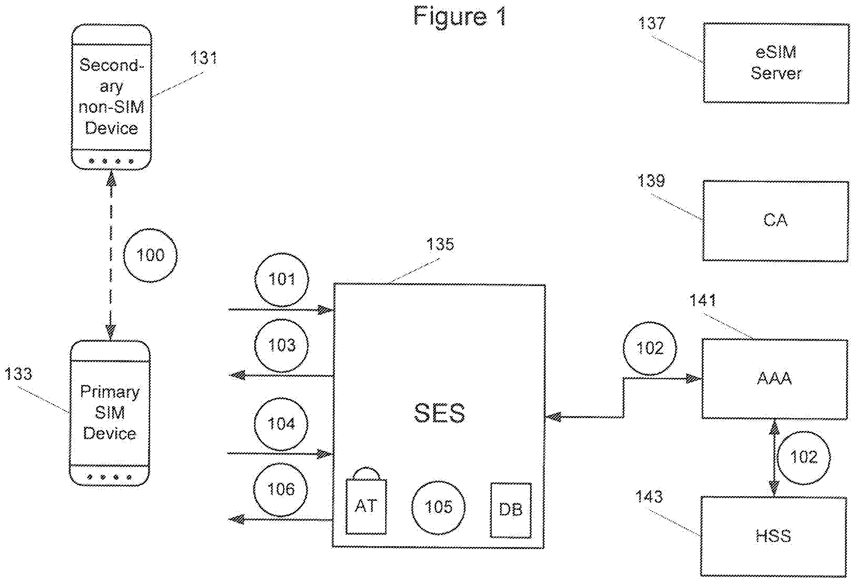

The diagram of Figure 1 illustrates interactions between a primary device 133 (primary SIM device), a secondary device 131 (secondary non-SIM device), and a Security Entitlement Server 135 to onboard the secondary device. Operations 100 to 106 are discussed below with reference to Figure 1.
Operation 100: Primary SIM device 133 may receive a unique device-id (device identification) from the secondary device 131, to be conveyed to the SES 135 at operation 104 (optionally).
Operation 101: Primary SIM device 133 may perform EAP_AKA (Extended Authentication Protocol Authentication Key Arrangement) authentication and validate entitlement to associate a secondary device.
Operation 102: EAP-AKA authentication for primary SIM device 133 may be performed between SES 135 and AAA 141.
Operation 103: SES (Secure Entitlement Server) 135 provides the entitlement response, and the EAP-AKA response to primary SIM device 133.
Operation 104: Primary SIM device 133 performs on-boarding of secondary device 131 to use a specific service: i.e., voice service. An identifier for secondary device 131 may be passed (received in step 100).
Operation 105: SES 135 generates a one-time-use access token AT for secondary device 131.
Operation 106: The one-time-use access token is sent back to primary device 133. The one-time-use access token is encrypted using the unique-identifier for secondary device 131.

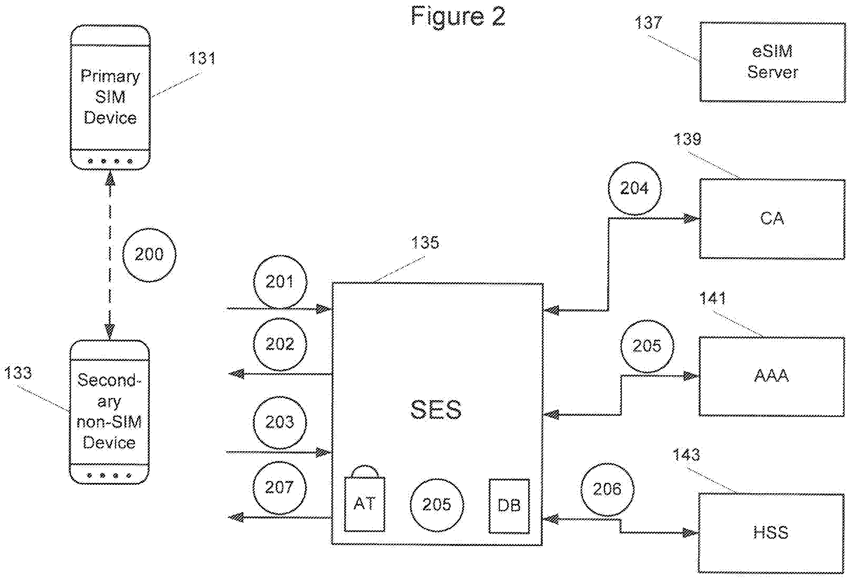

The diagram of Figure 2 illustrates secondary device 131 retrieving its credentials using its one-time-use access token. The service for which credentials are generated may be VoWiFi (Voice over WiFi) in this case, but the Secure Entitlement server 135 and the Application Program Interface API defined between the SES 135 and devices may also support provisioning of other services. Operations 200 to 207 are discussed below with reference to Figure 2.
Operation 200: The one-time-use access token is transferred from primary device 133 to secondary device 131, for example, using Bluetooth, QR, NFC, etc.
Operation 201: Secondary device 131 authenticates with the Secure Entitlement Server 135, and requests credentials.
Operation 202: A virtual International Mobile Subscriber Identity vIMSI is allocated by SES 135 and returned along with a certificate.
Operation 203: Secondary device 131 generates a Certificate Signing Request CSR toward the Secure Entitlement Server 135.
Operation 204: The certificate is signed by the Certification Authority 139 and returned to SES.
Operation 205: The vIMSI, along with Packet Data Network PDN parameters and the certificate are stored in AAA 141.
Operation 206: The HSS 143 is provisioned with an IMS (IP Multimedia Subsystem) subscription for the vIMSI. The provisioned vIMSI is part of the same Implicit Registration Set IRS in the HSS to associate the primary Mobile Station International Subscriber Directory Number MSISDN (Mobile Station International Subscriber Directory Number) with an MSISDN of secondary device 131. An IMS Private Identification IMPI based on the secondary vIMSI is provisioned along with an IMS Public Identification IMPU allocated to secondary device 131.
Operation 207. The signed certificate is returned, along with the IMS credentials for the secondary device. The secondary device can now access the IMS core through the untrusted Wi-Fi model using the evolved Packet Data Gateway ePDG and the Packet Gateway PGW.

The above use-cases demonstrate operations that may be performed by Secure Entitlement Server 135 to provision a Wi-Fi only device. It may also be possible to leverage Secure Entitlement Server 135 and use it in conjunction with an electronic SIM (eSIM) server to provision an electronic Integrated Circuit Card IDentification eICCID to secondary device 131. The logic may be similar and may be supported by Secure Entitlement Server 135.

Some embodiments of inventive concepts may allow a Secure Entitlement Server to be augmented with additional functionality as described in greater detail below including: an extendible Application Program Interface API exposed by the Secure Entitlement Server; and/or capabilities to provision and configure different network elements in the operator network from the Secure Entitlement Server.

In relation to IoT and secondary devices associated with a user, it may be important to be able to distribute SIM or non-SIM credentials to secondary devices, but it may be even more advantageous if such devices, or rather usage from such devices could be further controlled. According to some embodiments of inventive concepts, further functionality may leverage capabilities of a Secure Entitlement Server SES. Existing methods for SIM and/or non-SIM credential re-distribution and sharing, for example, may not allow the holder of a Primary SIM for a primary SIM device to control and/or obtain information related to usage of Secondary SIM devices using secondary SIMs associated with the primary SIM.

According to some embodiments of inventive concepts, further functionality may be added to a Primary SIM device to allow improved control of usage of the Primary SIM credentials by its Secondary SIM devices.

According to some embodiments of inventive concepts, a Primary SIM device and a number of Secondary SIM devices (i.e., one or more Secondary SIM devices) may define a Primary SIM group. Within this group, the user/holder of the Primary SIM device may be able to control network usage of a Secondary SIM device. A number of aspects of Secondary SIM device operation may be possible to control.

For example, a holder of a Primary SIM of a primary SIM device may be able to control an amount of data that a particular Secondary SIM of a secondary SIM device is valid to use. The holder of the Primary SIM of the primary SIM device may further be able to control limits of bit rates that the Secondary SIM device will be allowed to transmit and/or receive using the credentials.

Further, the holder of the Primary SIM of the primary SIM device may be able to control services that the Secondary SIM device(s) may access, or even internet addresses that the Secondary SIM device(s) may communicate with and/or download information from.

The holder of the Primary SIM of the primary SIM device may be allowed, at the on-boarding of the Secondary device, to configure properties of the secondary device subscription and associated notifications (which can be triggered toward the Primary SIM device should the Secondary SIM device attempt usage that exceeds limitations of its subscription/configuration) .

The holder of the Primary SIM of the primary SIM device may be able (through the Secure Entitlement Server) to keep track of the subscription status and the location of each of its associated Secondary SIM devices. When a Secondary device (whether SIM or Non-SIM) is on-boarded and associated with the primary SIM device, policies may be provisioned into the network (both policies that originate from the Primary SIM holder, but also, e.g., operator limitations) to define thresholds for different parameters. When/if these thresholds are exceeded, the primary SIM device may be notified.

According to some embodiments of inventive concepts, further functionality may be added to make available to a Primary SIM holder a controlling functionality for all its Secondary SIM devices. The controlling functionality may be supported by network functions such as SES.

Different devices (of different types) may then be on-boarded, ranging from Machine-to-Machine M2M types of devices to tablets, set-top boxes, in-vehicle communication service devices, etc.

By using an extendible API architecture, it may be possible to introduce a multitude of policies associated with the on-boarded devices depending on their types.

According to some embodiments of present inventive concepts, a Primary SIM device may associate with and trigger generation of credentials for a Secondary device. The primary SIM may, for example, be an embedded SIM that is embedded in the primary SIM device or a physical SIM card that is removably inserted in the primary SIM device. While a SIM is used in some embodiments, inventive concepts may be applicable in any situation when sharing and/or distributing credentials from one device (a primary device) to another (a secondary device). Some embodiments do not require an SIM credential.

The Primary SIM device may share its credentials in a number of different ways. In some embodiments, a secure entitlement server may be used as discussed above with respect to Figures 1 and 2.

The Primary SIM device may define service limitations (also referred to as policies) to be enforced for associated secondary devices depending of their types. Definitions of such service limitations may then be based on input from the Primary SIM device and potentially also operator policies for Secondary SIMs of secondary SIM devices, defined in the Secure Entitlement Server. Depending of their content, different network elements can be provisioned or configured, and/or a listener interface may be enabled with the target network elements such as a Policy and Charging Rules Function PCRF. For example:
1. The Primary SIM device may be able to control how a Secondary SIM device uses the Secondary SIM credentials. It may, for example, be able to control:
   Maximum allowed bit rate;
   Geographic area of validity;
   Maximum amount of data; and/or
   Service/internet usage limitations.
2. The Primary SIM device may be able to request a notification from the SES which will trigger an alert indication (visual or audible or both) if any of its associated Secondary SIM devices attempt to exceed any or all of the limitations configured.
3. The Primary SIM device may also be able to enable a tracking functionality, such that it will be able to locate the Secondary SIM devices to the accuracy allowed by other network and/or Secondary SIM device functions.
4. The Primary SIM device may be able to define allowed services for a secondary device access credential.
5. The Primary SIM device may be able to provide hours of operations for a secondary device. This may be a particularly interesting feature for M2M devices.

The policies may be activated at any point in time after activating and associating a secondary SIM device. The policies may be stored in the Secure Entitlement Server, and the policies may be augmented without impacting the deployed devices, as the enforcement may occur in the network.

An existing API defined for the Secure Entitlement Server may be used to enable definition of the policies, and this API can be augmented to define policies associated with different devices types.

The Secure Entitlement Server may also control authorization to enforce policies for the user of the primary device (whether the user has the rights to enforce read and write policies, or whether only read policies are authorized).

In the following description, "network" will indicate that a signal is sent to a corresponding network entity (e.g., the SES) that is capable of either directly (for a non-SIM device) or indirectly (through use of an eSIM server) provisioning secondary credentials.

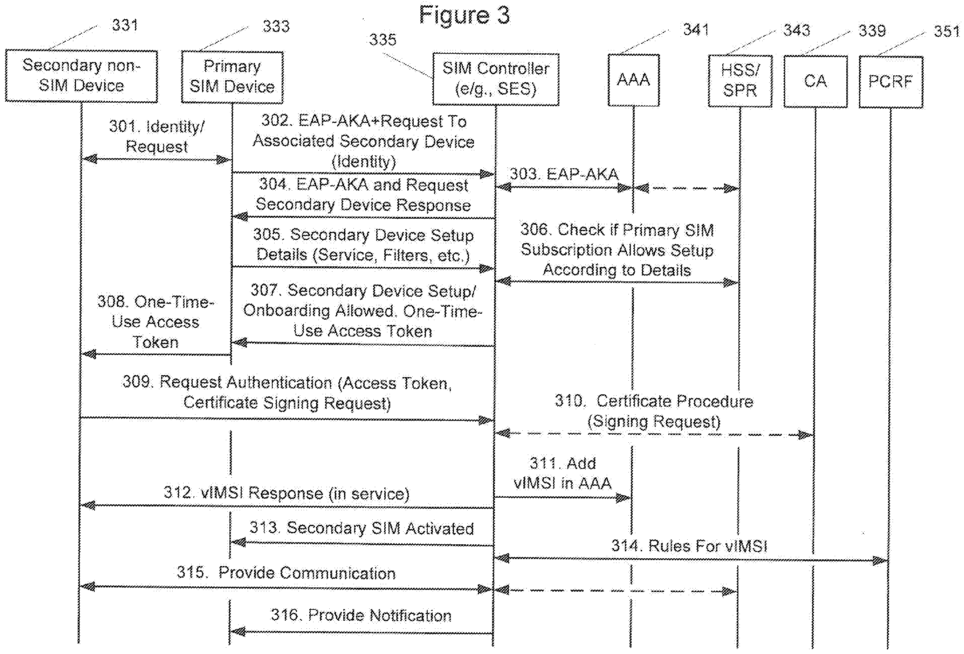

Generation of a secondary SIM may be done using operations 301 to 314 discussed below with respect to the messaging diagram of Figure 3.
Operation 301: Primary SIM device 333 and Secondary SIM device 331 (for which secondary credentials are to be created) may communicate to provide, for example, a secondary SIM identity (of secondary SIM device 331) from secondary SIM device 331 to Primary SIM device 333 prior to communication with the network via SIM controller 335.
Operations 302 and 303: Primary SIM device 333 may then perform an authentication (EAP-AKA/AKA') procedure (through the SES 335, AAA 341, and/or HHS/SPR 343) and request a new Secondary SIM credential or to trigger the reservation and binding of an eICCID (when an eSIM based device is used).
Operation 304: Primary SIM device 333 may receive the EAP-AKA and the Request, and possibly, SIM controller 335 may include a list of policies applicable to the type of secondary device being activated.
Operation 305: Primary SIM device 333 may then communicate the preference details defining how the new Secondary SIM of the secondary SIM device 331 should be valid (taking SES-indicated limitations into account). This may include the limitations as described above, e.g., geographic limitations, limitations in bit rates, limitations when the Secondary SIM may be used, etc.
Operation 306: SES controller 335 may check with subscription data at HHS/SPR 343 for the primary SIM of primary SIM device 333, to confirm that it is allowed to set-up a secondary SIM for a secondary SIM device according to the request of operation 305. In some situations, subscriptions for some Primary SIM devices 333 with an operator may have such opportunities while other subscriptions for other SIM devices may not. Checking towards HSS/SPR 343 may allow for operators to allow Secondary SIM's selectively, or for that matter, put operator limitations on how a Secondary SIM device may be valid. This may either be done through subscription data for the Primary SIM device, or through adding policy information to the vIMSI in the step/s below, or both. Further, SIM controller 335 may validate the policies and trigger the provisioning of the applicable nodes to enforce the policies. If notifications are defined, registration of push tokens may take place with SIM controller 335.
Operation 307: Once all the checks are complete and it has been concluded that the request for a secondary SIM device is allowed (according to the request/limitations), SIM controller 335 may issue a one-time-use access token AT and send the one-time-use access token to the Primary SIM device 333. The one-time-use access token will be used by the Secondary SIM device 331 in initial communications with SIM controller 335.
Operation 308: Primary SIM device 333 may forward the one-time-use access token to the Secondary SIM device 331, for example, using a short range wireless/wired communication interface, such as, Bluetooth, Wi-Fi, USB, etc.
Operations 309 and 310: Secondary SIM device 331 may send a request to SIM controller 335, and, dependent on service, may also go through a Certificate Signing Request Procedure (for example, if there are specific services that require a Certificate from a Certificate Authority, e.g., access to ePDG for IMS/VoWiFi).
Operation 311: SIM controller 335 may generate a virtual International Mobile Subscriber Identification vIMSI and add the vIMSI to the AAA 341 for provisioning the Secondary SIM device.
Operation 312: The vIMSI (and more/other "permanent" credentials) may be communicated to Secondary SIM Device 331.
Operation 313: An indication that the Secondary SIM device is now active may be sent to the primary SIM device 333.
Operation 314: At any point in the future, if restrictions (e.g., in service, use, etc.) should be imposed on the traffic to/from the secondary SIM device 331, PCRF 351 may be involved in such policy rules (service limitations), and Policy and Charging Enforcement Function PCEF may be involved in enforcement.

Different functionalities of SIM controller 335 will now be described in greater detail according to some embodiments of inventive concepts. These functionalities will be described using a "Secondary SIM" of Secondary SIM device 331 as an example, but these functionalities may be equally applicable for other credential types, other than e/SIM. Further, in the description below, functionality of the controller may reside in the network, and communication with a controller/connectivity manager can be provided from primary SIM device 333.

Primary SIM device 333 may (when initiating a request for a Secondary SIM of Secondary SIM device 331), through an MMI (Man Machine Interface) or otherwise, set service limitations of a Secondary SIM of secondary SIM device 331. Such service limitations may include one or more of:
- Maximum allowed bit rate: This may be entered as a digit through the MMI of the Primary Device.
- Geographic area of validity: This may be entered as coordinates or other relevant indications of location limitation, dependent on what is supported by the network. The geographic location may alternatively be indicated as a "relative position" to the Primary SIM device 333, e.g., same connectivity access point as Primary SIM Device 333 only.
- Maximum amount of Data the Secondary SIM is valid for: This may be possible to configure either as an amount per period or as an amount without a duration/period associated with it.
- Service/internet usage limitations: Primary SIM device 333 may, for example, only allow a camera accessing the network to direct traffic to or from a server to store and edit photography (e.g., www."camerabrand".com), or to download new software. Other servers may thus be prohibited. The configuration of such limitations may be such that only allowed server addresses are entered or such that not-allowed content/addresses are entered. The latter may be feasible if the Secondary SIM is distributed (e.g., to children's smart-phones), such that there is an inherent parental control of what the Secondary SIM credentials are used for.

Primary SIM device 333 and installed controller may also configure alarm and/or tracker functionality to support keeping track of devices using Secondary SIM credentials.

During initiation and creation of a Secondary SIM for secondary SIM device 331, Primary SIM device 333 will signal the network to request generation of the Secondary SIM for secondary SIM device 331. Associated with the request of the Secondary SIM, a set of criteria may be provided according to operation 305 discussed above.

On the network side, SIM controller 335 may read the details of the request to create a Secondary SIM, along with configured limitations, usage parameters, location functionality, alarms etc., as discussed above, and create a Secondary SIM profile. The Secondary SIM may then be created (e.g., as is described above). It is the network and/or SIM controller 335 that enforce the Secondary SIM parameters and make sure that parameters and limitations related to its use, as configured/requested by the Primary SIM device 333, are followed. One way of enforcing this is through interfacing a Policy Charging and Rules Function PCRF such that usage of network resources related to a certain identity (e.g., Secondary SIM) are associated with its respective profile. The profile can either be kept in SIM controller 335, or in another node, for example, HSS/SPR node 343. In the example above, rules are stored in HSS/SPR 343 and fetched when the credential/Secondary SIM device 331 is in use, e.g., from PCRF.

Enforcement of parameters and limitations for a secondary SIM of a Secondary SIM device, for example, may be managed in a way that is similar the way that limitations of subscriptions (rates, areas, data volumes, etc.) is managed in current networks, through policies and rules that are associated with a certain subscriber and that go through a policy and rules function (PCRF). It may also be the case that SIM controller 335 may have interfaces to radio network nodes or controllers, such that certain limitations (e.g., air interface rate/allocations, delays and/or priority, etc.) may be controlled by SIM controller 335.

Primary SIM device 333 may signal the network, and using the same API as used for the configuration/creation of the Secondary SIM, it may be possible to send a "SSIM status report request". Primary SIM device 333 may then receive a list of its associated Secondary SIM's, and their respective traffic status. Push notifications could also be configured, such that Primary SIM device 333 will learn, for example, if any of the Secondary SIM devices are about to "run out of' credentials, e.g., time/duration, data amount, etc. Further, a push notification may be relevant if any of the Secondary SIM devices are leaving a certain geographical area. According to some embodiments of present inventive concepts, Primary SIM device 333 may be allowed to configure a name-string associated with a created Secondary SIM, e.g., "My Camera" and associate both the generated credentials and the parameters/limitations configured with this Secondary SIM name. A SSIM status Report sent from SIM controller 335 to Primary SIM device 333, may include additional information.

Further, it may also be possible to change/update the parameters/limitations on an already defined Secondary SIM through SIM controller 335 and/or network, using similar signaling as for Secondary SIM initiation, as discussed above.

To provide the reports and/or push notifications as described, SIM controller 335 may need to interface with the nodes responsible for enforcing the limitations, e.g., PCRF/PCEF, AAA etc.

**Table 1**

| Secondary SIM | My Camera |
|---|---|
| Rate Limit | 4 Mb/s |
| Data Limit/Month | 1GB |
| Service | www."camerabrand".com |
| Status | Active |
| Alerts | None |
| Position | Within |

The For each generated Secondary SIM associated with primary SIM device 333, information similar to that shown above in Table 1 may appear if SIM Controller 335 is active for Primary SIM device 333.

Revocation of a Secondary SIM credential may be initiated by Primary SIM device 333 signaling the network with a revoke message and an associated Secondary SIM identity.

According to other embodiments of present inventive concepts, restrictions may be applied on how many Secondary SIM devices may be allowed for a certain primary SIM of a primary SIM device. Such information may be stored for a certain (Primary SIM) subscriber in Home Subscriber Server Subscriber Profile Repository HSS/SPR 343. Certain subscriptions may or may not be allowed to generate a Secondary SIM and further, some subscriptions may also have restrictions defining policies that are or are not possible to adjust from the Primary SIM holder (i.e., Secondary SIM policies that are partially or fully operator controlled). For example, the network operator may impose restrictions that Secondary SIMs may only be offered at a certain data rate.

According to some embodiments of inventive concepts, more granularly defined policies may be provided for secondary SIM and Non-SIM devices, and further control of 3GPP mobile network access by these secondary SIM and/or non-SIM devices may be provided, instead of allowing an Over-The-Top OTT type of control. Additional embodiments of inventive concepts may allow for primary SIM control over how secondary SIM devices may use credentials and/or for visibility of how secondary SIM devices use credentials. These policies may be leveraged by OTT applications as well, with an advantage of an optimized network level policy enforcement, which can be augmented over time with different policies as new device types and use-cases are introduced.

According to some embodiments of inventive concepts, a method may be provided in a first communication network node 335 (e.g., a SIM controller, which may be a Security Entitlement Server SES) to create a second set of credentials for a second communications device 331 (also referred to as a secondary communication device, which may be a secondary SIM or non-SIM device) and connect/associate these credentials with credentials of a first communications device 333 (also referred to as a primary communication device, which may be a primary SIM device). More particularly, the first communication network node 335 may configure validity of credentials for the second communications device 331 based on input received from the first communication device 333.

The first communication device 333 may trigger creation of the credentials for second communication device 331 by authenticating using a first credential, such as an SIM credential.

In addition, the first communication network node 335 may communicate with at least a second communication network node (e.g., HSS/SPR 343) to provide a set of rules and/or policies associated with the second credential for the second communication device 331.

According to some other embodiments of inventive concepts, a method may be provided in a first communication device 333 (also referred to as a primary communication device, which may be a primary SIM device) to create a second set of credentials for a second communication device 331 (also referred to as a secondary communication device, which may be a secondary SIM or non-SIM device). More particularly, the first communication device 333 may signal to a first network node 335 (e.g., a SIM controller, which may be a Security Entitlement Server SES) at least an indication of service limitations (also referred to as validity conditions) to be associated with the second set of credentials for the second communications device 331.

The service limitations may include conditions defining a geographical area/areas in which the second set of credentials are valid and/or invalid.

The service limitations include conditions defining an air interface bit rate (e.g., a maximum bit rate) that is associated with the second set of credentials.

The service limitations may include conditions defining a service (or services) for which the second set of credentials are valid and/or invalid.

The service limitations may include conditions defining a time-of-day (or times-of-day) for which the second set of credentials are valid and/or invalid.

In addition, the first communication device 333 may send a request to the first network node 335 defining reports that should be regularly sent to the first communications device 335, where the reports relate to usage of the second set of credentials for the second communication device 331.

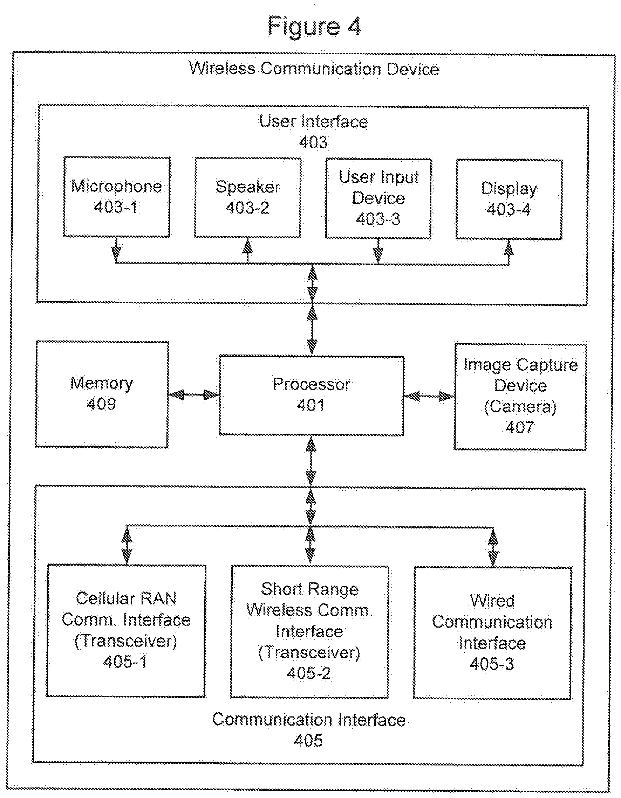

Figure 4 is a block diagram illustrating a wireless communication device (e.g., device 333 and/or 331) of Figure 3 according to some embodiments. As shown, the wireless communication device may include processor 401 coupled with user interface 403, communication interface 405, and memory 409. In addition, the wireless communication device may include image capture device (e.g., a camera) 407 coupled with processor 401. As shown, user interface may include one or more of microphone 403-1, speaker 403-2, user input device 403-3, and/or display 403-4. User input device may include a keypad, keyboard, mouse, trackball, button(s), etc., and/or display 403-4 and portions of user input device 403-3 may be integrated in a touch sensitive screen. Communication interface may include one or more of a cellular radio access network (RAN) interface (also referred to as a RAN transceiver), a short range wireless communication interface (e.g., a Near Field Communication NFC transceiver, a BlueTooth transceiver, an infrared IR transceiver, a WiFi transceiver, etc.), and/or a wired network communication interface. The wireless communication device can thus provide communication through the network of Figure 3 using communication interface 405 (e.g., using one or more of cellular RAN communication interface 405-1, short range wireless communication interface 405-2, and/or wired communication interface 405-3). In addition, the wireless communication device may be configured to communicate with one or more other wireless communication devices directly (without using a network) using one or more elements of communication interface (e.g., using short range communication interface 405-2 and/or wired communication interface 405-3).

Processor 401 (also referred to as a processor circuit, processing circuitry, or processor module) may include one or more data processing circuits, such as a general purpose and/or special purpose processor (e.g., microprocessor and/or digital signal processor). Processor 401 may be configured to execute computer program instructions from functional modules in memory 609 (also referred to as a memory circuit, memory circuitry, or memory module), described herein as a computer readable medium, to perform some or all of the operations and methods that are described herein for one or more of the embodiments. Moreover, processor 401 may be defined to include memory so that separate memory 409 may not be required.

When a structure of a particular wireless communication device (i.e., wireless communication device 333 or 331) is described, "a" or "b" may be respectively added to the reference number to designate the particular device. Wireless communication device 333, for example, may be discussed as including processor 401a, user interface 403a (e.g., including one or more of microphone 403-1a, speaker 403-2a, user input device 403-3a, and/or display 403-4a), communication interface 405a (including one or more of cellular RAN interface 405-1a, short range communication interface 405-2a, and/or wired communication interface 405-3a), image capture device 407a, and memory 409a. Similarly, wireless communication device 331, for example, may be discussed as including processor 401b, user interface 403b (e.g., including one or more of microphone 403-1b, speaker 403-2b, user input device 403-3b, and/or display 403-4b), communication interface 405b (including one or more of cellular RAN interface 405-1b, short range communication interface 405-2b, and/or wired communication interface 405-3b), image capture device 407b, and memory 409b.

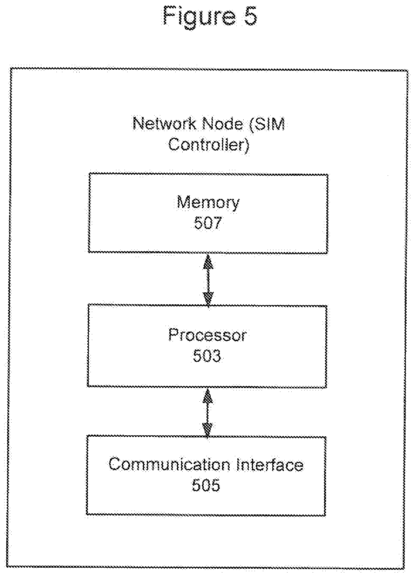

Figure 5 is a block diagram illustrating a network control node (e.g., SIM controller) 335 of Figure 3 according to some embodiments of inventive concepts. As shown, control node 335 may include processor 503 coupled with communication interface 505 (also referred to as a network interface), and memory 507. Control node 335 may thus provide communication with other network elements and/or wireless communication devices using network interface 505. Processor 503 (also referred to as a processor circuit, processing circuitry, or processor module) may include one or more data processing circuits, such as a general purpose and/or special purpose processor (e.g., microprocessor and/or digital signal processor). Processor 503 may be configured to execute computer program instructions from functional modules in memory 507 (also referred to as a memory circuit, memory circuitry, or memory module), described below as a computer readable medium, to perform some or all of the operations and methods that are described herein for one or more of the embodiments. Moreover, processor 503 may be defined to include memory so that separate memory 507 may not be required.

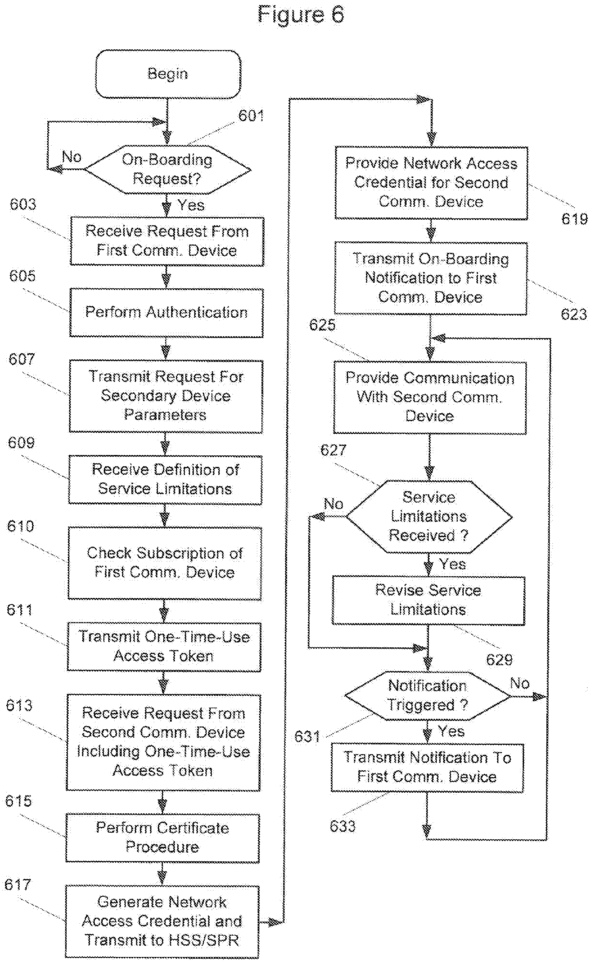

Figure 6 is a flow chart illustrating operations of a network node (e.g., SIM controller 335) according to some embodiments of inventive concepts. Responsive to an on-boarding request from first communication device 333 (also referred to as a primary communication device) at block 601, network node processor 503 may receive a request from first communication device 333 through communication interface 505 at block 603 as discussed above with respect to message/operation 302 of Figure 3. More particularly, the request may include a request to associate second communication device 331 (with first communication device 333), and the request may include an identification for the second communication device. The request may also include a network access credential for first communication device 333 (e.g., a Subscriber Identity Module SIM credential, such as an IMSI, for first communication device 333). More particularly, a network access credential is a unique identification that is associated with a particular communication device. The network access credential is used by the associated communication device to gain access to a communication network, and the network access credential is used by the communication network to allow/deny network access for the associated communication device.

At block 605 processor 503 may perform authentication as discussed above with respect to message/operation 303 of Figure 3 (e.g., including transmission/reception to/from AAA 341 and/or HSS/SPR 343 through communication interface 505). At block 607, processor 503 may transmit a request for parameters for second communication device 331 to first communication device 333 through communication interface as discussed above with respect to message/operation 304 of Figure 3.

At block 609, processor 503 may receive definition of a service limitation for second communication device 331 as discussed above with respect to message/operation 305 of Figure 3. More particularly, the definition of the service limitation may be received from first communication device 333 through communication interface 505. The service limitation may define a restriction or restrictions regarding how, when, and/or where second communication 331 device is able to use the network. For example, a limitation for the service may include at least one of a geographic limitation, a data rate limitation, a time of use limitation, a data use limitation, a network access limitation, and/or a service type limitation, as discussed above. A definition of a service limitation may be any identifier (e.g., index, text/number string, code, etc.) used to identify a particular service limitation in communications between different devices/nodes.

At block 610, processor 503 may check if a subscription associated with first communication device 333 allows setup for second communication device using service limitations of block 609 (e.g., based on the network access credential for first communication device 333). For example, processor 503 may check using transmission/reception to/from HSS/SPR 343 through communication interface 505. Responsive to determining that the subscription associated with first communication device 333 allows the requested setup, processor 503 may transmit a one-time-use access token AT through communication interface 505 to first communication device 333 at block 611, as discussed above with respect to message/operation 307 of Figure 3. According to some other embodiments, block 610 (corresponding to message/operation 306) may precede block 607 (corresponding to message/operation 304), and the request of block 607 may be based on a the subscription associated with first communication device 333.

At operation 613, processor 503 may receive a request for authentication from second communication device 331 through communication interface 505 as discussed above with respect to message/operation 309 of Figure 3. At operation 615, processor 505 may perform a certificate procedure for second communication device 331 (e.g., including transmission/reception to/from CA 339 through communication interface 505) as discussed above with respect to message/operation 310. At operation 617, processor 503 may generate a network access credential for second communication device 331 and associate the network access credential for second communication device 331 with the network access credential (e.g., an IMSI) for first communication device 333 (e.g., including transmission/reception to/from HSS/SPR 343 through communication interface 505) as discussed above with respect to message/operation 311 of Figure 3. According to some embodiments, the network access credential for second communication device 331 may be a SIM credential (e.g., a vIMSI). According to some other embodiments, the network access credential may be a non-SIM credential.

At operation 619, processor 503 may provide the network access credential (e.g.,. the vIMSI) for second communication device 331. For example, processor 503 may transmit the network access credential through communication interface 505 to second communication device 331 as discussed above with respect to operation 312. The network access credential may thus be transmitted to second communication device 331 in response to the request of block 603 from first communication device 333. At block 623, processor 503 may transmit an on-boarding notification through communication interface 505 to first communication device 333 as discussed above with respect to message/operation 313.

According to some other embodiments, processor 503 may transmit the network access credential through communication interface 505 to first communication device 333, and first communication device 333 may provide the network access credential to second communication device 331 (e.g., using operations similar to those discussed above with respect to block 611). In such embodiments, one or more operations of blocks 611, 613, 615, 617, and/or 623 may be omitted.

At block 625, processor 503 may provide (e.g., support) communication for the second communication device (331) in accordance with the service limitation(s) of block 609 using the network access credential for second communication device 331 as discussed above with respect to message/operation 315. Providing communication at block 625 may include supporting one or more separate communications (e.g.,. calls, sessions, etc.) between second communication device 331 and one or more other communication devices over any period of time.

After receiving the initial definition of the service limitation(s) at block 609 and after providing communication for the second communication device in accordance with the initial service limitation(s), processor 503 may receive definition of a subsequent service limitation(s) for second communication device at blocks 627 and 629, with the definition of the subsequent service limitation being received from first communication device 333 through network interface 505. Receiving the definition of the subsequent service limitation(s) may include operations similar to those discussed above with respect to blocks 603, 605, 607, and 609 (e.g., including receiving a request from first communication device 333, authenticating the request, transmitting request for parameters, and receiving the definition). After receiving the definition of the second service limitation, processor 503 may provide communication for second communication device 331 at block 625 in accordance with the subsequent service limitation(s) using the network access credential for second communication device 331.

In addition, operations of block 609 may further include receiving definition of a notification threshold(s) from first communication device 333 through communication interface 505. For a given service limitation, a notification threshold may define criteria relating to the service limitation for second communication device that triggers transmission of a notification to first communication device 333. For a geographical service limitation, a notification threshold may define that a notification is transmitted to first communication device 333: if second communication device crosses a boundary defined by the geographic service limitation; if second communication device attempts a communication outside a boundary defined by the geographic service limitation; etc. For a bit rate service limitation, a notification threshold may define that a notification is transmitted to first communication device 333: if second communication device 331 reaches/exceeds the bit rate service limitation; if second communication device 331 reaches/exceeds a threshold percentage of the bit rate service limitation; etc. For a service limitation that defines valid/invalid services, a notification threshold may define that a notification is transmitted to first communication device 333: if second communication device 331 attempts access to a prohibited service (e.g., a service not included in an allowed list of services, and/or a service included in a prohibited list of services). For a service limitation that defines valid/invalid times-of-use, a notification threshold may define that a notification is transmitted to first communication device 333: if second communication device attempts communication during a prohibited time (e.g., outside an allowed time of use, or during a prohibited time of use). Responsive to communication usage of second communication device 331 triggering a notification threshold relative to the service limitation at block 631, processor 503 may transmit a notification to first communication device 333 at block 633. Moreover, notification thresholds may be updated at blocks 627 and 629 responsive to further definition received from first communication device 333.

Communications between network node 335 and first and second communication devices 333/331, for example, may be provide through one or a combination of a radio access network RAN, a wide area network, the Internet, a local area network LAN, a wireless local area network WLAN, etc. Moreover, a last link to/from the first and/or second communications devices may include a radio air interface, for example, between the first and/or second communication device and a cellular radio access network or a WiFi network.

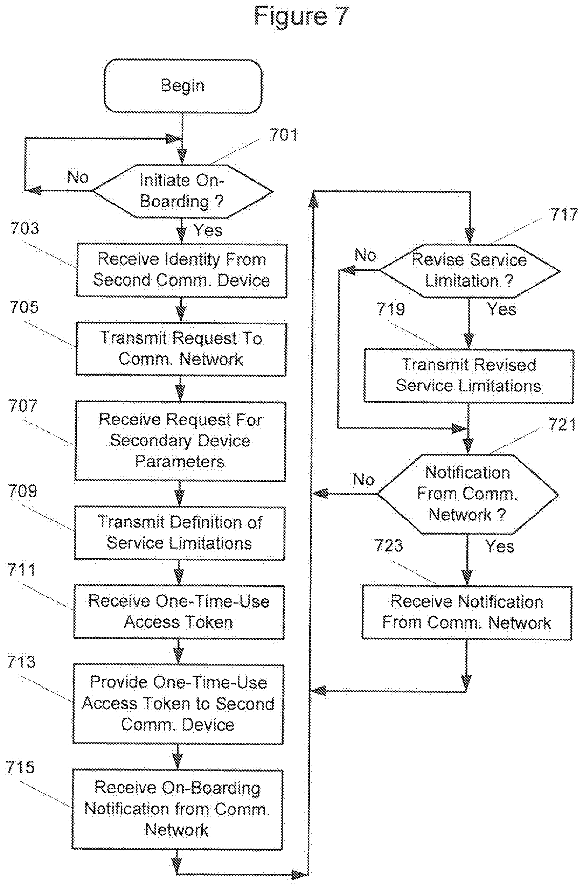

Figure 7 is a flow chart illustrating operations of first communication device 333 (also referred to as a primary communication device) according to some embodiments of inventive concepts. Processor 401 of first communication device 333, for example, may initiate on-boarding of second communication device 311 at block 701 responsive to user input through user interface 403. At block 703, processor 401 may receive an identification of second communication device 331 (e.g., through communication interface 403 and/or image capture device 407) from second communication device 333 as discussed above with respect to message/operation 301 of Figure 3. The identification of second user device 331 may be received, for example, through short range wireless communication interface 405-2 (e.g., using a Bluetooth transceiver, a Near Field Communication NFC transceiver, etc.), through wired communication interface 405-3 (e.g., using a Universal Serial Bus USB interface), or through image capture device 407 (e.g., as a QR code).

At block 705, processor 401 may transmit a request to the communication network through communication interface 405 (e.g., through cellular RAN communication interface 405-1) as discussed above with respect to message/operation 302 of Figure 3 and block 603 of Figure 6. More particularly, the request may be a request to associate the second communication device 331 (with first communication device 333), and the request may include the identification for second communication device 331 that was received at block 301. In addition, the request may include a network access credential (e.g., an SIM credential, such as an IMSI) for first communication device 333.

At block 707, processor 401 may receive a request for parameters for second communication device 331 from the communication network through communication interface 405 (e.g., through cellular RAN communication interface 405-1) as discussed above with respect to message/operation 304 of Figure 3 and block 607 of Figure 6. Responsive to receiving the request of block 707, processor 401 may transmit definition of a service limitation for second communication device 331 through communication interface 405 (e.g., cellular RAN communication interface) to the communication network at block 709 as discussed above with respect to message/operation 305 of Figure 3 and block 609 of Figure 6. The limitation for the service may include at least one of a geographic limitation, a data rate limitation, a time of use limitation, a data use limitation, a network access limitation, and/or a service type limitation.

At block 711, processor 401 may receive a one-time-use access token AT from the communication network through communication interface 405 (e.g., through cellular RAN communication interface) as discussed above with respect to message/operation 307 of Figure 3 and block 611 of Figure 6. At bock 713, processor may provide the one-time-use access token to second communications device 331 (e.g., using short range wireless communication interface 405-2, wired communication interface 405-3, image capture device 407, etc.) as discussed above with respect to message/operation 308 of Figure 3. At block 715, processor 401 may receive an on-boarding notification from the communication network through communication interface 405 (e.g., using cellular RAN communication interface 405-1) as discussed above with respect to message/operation 313 of Figure 3 and block 623 of Figure 6. As discussed above with respect to blocks 625, 627, 629, 631, and 633 of Figure 6, the communication network may provide communication with second communication device 331 in accordance with the defined service limitations.

According to some other embodiments, processor 401 may receive a network access credential from the communication network through communication interface 405, and processor 401 may provide the network access credential to second communication device 331 (e.g., using operations similar to those discussed above with respect to blocks 711 and 713). In such embodiments, one or more operations of blocks 711, 713, and/or 715 may be omitted.

After receiving on-boarding notification of block 715, processor 401 may revise service limitations for second communication device at blocks 717 and 719. Responsive to user input through user interface 403, for example, processor 401 may transmit definition of a revised service limitation for second communication device 331 through communication interface 405 (e.g., using RAN interface 405-1) to the communication network at blocks 717 and 719 as discussed above with respect to blocks 627 and 629 of Figure 6.

In addition to service limitations, processor 401 may also transmit definition of a notification threshold(s) through communication interface 405 (e.g., using cellular RAN communication interface 405-1) to the communication network at block 709 as discussed above with respect to Figure 6. At blocks 721 and 723, processor 401 may thus receive notifications from communication network through communication interface 405 (e.g., using RAN interface 405-1) as discussed above with respect to blocks 631 and 633 based on the notification threshold(s). Moreover, notification thresholds may be modified at operations 717 and 719.

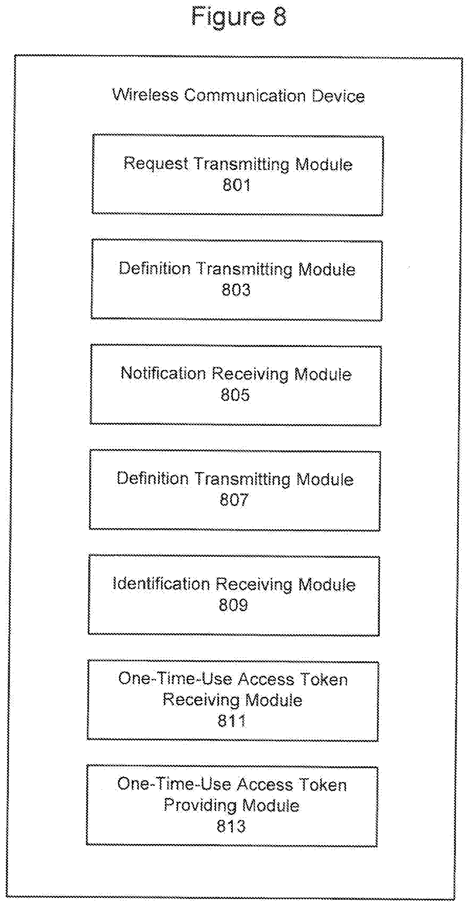

Figure 8 is a block diagram illustrating examples of modules of a computer program that may reside in memory 409 of the wireless communication device of Figure 4. As shown, the computer program residing in memory 409 may be organized as appropriate function modules configured to perform, when executed by processor 401, at least part of the steps and/or tasks described herein, for example, with respect to Figure 7.

As discussed above, communication device 333 may be adapted for operation in a communication network. With reference to Figure 8, communication device 333 may include request transmitting module 801 for transmitting a request to the communication network, wherein the request is to associate second communication device 331, and wherein the request includes an identification for second communication device 331. Communication device 333 may also include definition transmitting module 803 for transmitting a definition of a service limitation for second communication device 331, wherein the definition of the service limitation is transmitted from first communication device 333 to the communication network.

Communication device 333 may also include notification receiving module 805 for receiving a notification from the communication network wherein the notification indicates usage of second communication device 331 exceeding a notification threshold relative to the definition of the service limitation. Communication device 333 may further include definition transmitting module 807 for transmitting a definition of the notification threshold from first communication device 333 to the communication network before receiving the notification.

In addition, communication device 333 may include identification receiving module 809 for receiving the identification for second communication device 331 from second communication device 331 before transmitting the request, one-time-access token receiving module 811 for receiving a one-time-use access token from the communication network after transmitting the request, and a one-time-use access token providing module 813 for providing the one-time-use access token to second communications device 331.

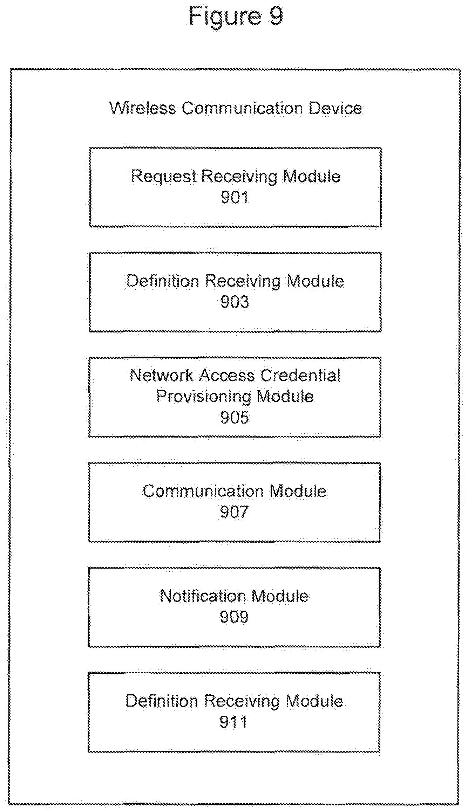

Figure 9 is a block diagram illustrating examples of modules of a computer program that may reside in memory 507 of the network node of Figure 5. As shown, the computer program residing in memory 507 may be organized as appropriate function modules configured to perform, when executed by processor 503, at least part of the steps and/or tasks described herein, for example, with respect to Figure 6.

As discussed above, network node 335 may be provided in a communication network. Network node 335 may include request receiving module 901 for receiving a request from first communication device 333, wherein the request is to associate second communication device 331, and wherein the request includes an identification for second communication device 331. Definition receiving module 903 is for receiving a definition of a service limitation for second communication device 331, wherein the definition of the service limitation is received from first communication device 333. Network access credential provisioning module 905 is for providing a network access credential for second communication device 331 in response to the request from first communication device 333. Communication module 907 is for providing communication for second communication device 331 in accordance with the definition of the service limitation using the network access credential.

In addition, network node 335 may include notification module 909 for transmitting a notification to first communication device 333 responsive to communication usage of second communication device 331 triggering a notification threshold relative to the definition of the service limitation. Moreover, network node 335 may include definition receiving module 911 for receiving a definition of the notification threshold from first communication device 333 before transmitting the notification.

### FURTHER DEFINITIONS

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A method of operating a network node in a communication network, the method comprising:
receiving (603) a request from a first communication device (333), wherein the request is to associate a second communication device (331), and wherein the request includes an identification for the second communication device (331);
receiving (609) a definition of a service limitation for the second communication device (331), wherein the definition of the service limitation is received from the first communication device (333);
in response to the request from the first communication device (333), providing (619) a network access credential for the second communication device (331);
providing (625) communication for the second communication device (331) in accordance with the definition of the service limitation using the network access credential; and **characterised by**: responsive to communication usage of the second communication device (331) triggering a notification threshold relative to the definition of the service limitation, transmitting (633) a notification to the first communication device (333).

2. The method of Claim 1 wherein the definition of the service limitation comprises at least one of a definition of a geographic service limitation, a definition of a data rate service limitation, a definition of a time of use service limitation, a definition of a data use service limitation, a definition of a network access service limitation, and/or a definition of a service type service limitation.

3. The method of Claim 1 further comprising:
before transmitting the notification, receiving (609) a definition of the notification threshold from the first communication device (333).

4. A method of operating a first communication device (333) in a communication network, the method comprising:
transmitting (705) a request to the communication network, wherein the request is to associate a second communication device (331), and wherein the request includes an identification for the second communication device (331);
transmitting (709) a definition of a service limitation for the second communication device (331), wherein the definition of the service limitation is transmitted from the first communication device (333) to the communication network; and
**characterised by**: receiving (723) a notification from the communication network wherein the notification indicates usage of the second communication device (331) exceeding a notification threshold relative to the definition of the service limitation.

5. The method of Claim 4 wherein the definition of the service limitation comprises at least one of a definition of a geographic service limitation, a definition of a data rate service limitation, a definition of a time of use service limitation, a definition of a data use service limitation, a definition of a network access service limitation, and/or a definition of a service type service limitation.

6. A node (335) of a communication network, wherein the node is adapted to:
receive a request from a first communication device (333), wherein the request is to associate a second communication device (331), and wherein the request includes an identification for the second communication device (331);
receive a definition of a service limitation for the second communication device (331), wherein the definition of the service limitation is received from the first communication device (333);
provide a network access credential for the second communication device (331) in response to the request from the first communication device (333);
provide communication for the second communication device (331) in accordance with the definition of the service limitation using the network access credential;
and **characterised by**: transmit a notification to the first communication device (333) responsive to communication usage of the second communication device (331) triggering a notification threshold relative to the definition of the service limitation.

7. The node (335) of Claim 6 wherein the definition of the service limitation comprises at least one of a definition of a geographic service limitation, a definition of a data rate service limitation, a definition of a time of use service limitation, a definition of a data use service limitation, a definition of a network access service limitation, and/or a definition of a service type service limitation.

8. The node (335) of Claim 6, wherein the node is further adapted to:
receive a definition of the notification threshold from the first communication device (333) before transmitting the notification.

9. A first communication device (333) adapted for operation in a communication network, wherein the first communication device is adapted to:
transmit a request to the communication network, wherein the request is to associate a second communication device (331), and wherein the request includes an identification for the second communication device (331);
transmit a definition of a service limitation for the second communication device (331), wherein the definition of the service limitation is transmitted from the first communication device (333) to the communication network; and **characterised by**: receive a notification from the communication network wherein the notification indicates usage of the second communication device (331) exceeding a notification threshold relative to the definition of the service limitation.

10. The first communication device (333) of Claim 9 wherein the definition of the service limitation comprises at least one of a definition of a geographic service limitation, a definition of a data rate service limitation, a definition of a time of use service limitation, a definition of a data use service limitation, a definition of a network access service limitation, and/or a definition of a service type service limitation.

11. The first communication device (333) of Claim 9 wherein the first communication device is further adapted to:
transmit a definition of the notification threshold from the first communication device (333) to the communication network before receiving the notification.

## Patentansprüche

1. Verfahren zum Betreiben eines Netzwerkknotens in einem Kommunikationsnetzwerk, wobei das Verfahren umfasst:
Empfangen (603) einer Anfrage von einem ersten Kommunikationsgerät (333), wobei die Anfrage ist, ein zweites Kommunikationsgerät (331) zu verknüpfen, und wobei die Anfrage eine Identifikation für das zweite Kommunikationsgerät (331) beinhaltet;
Empfangen (609) einer Definition einer Dienstbegrenzung für das zweite Kommunikationsgerät (331), wobei die Definition der Dienstbegrenzung von dem ersten Kommunikationsgerät (333) empfangen wird;
in Antwort auf die Anfrage von dem ersten Kommunikationsgerät (333), Bereitstellen (619) einer Netzwerkzugangsanmeldeinformation für das zweite Kommunikationsgerät (331);
Bereitstellen (625) von Kommunikation für das zweite Kommunikationsgerät (331) in Übereinstimmung mit der Definition der Dienstbegrenzung, unter Verwendung der Netzwerkzugangsanmeldeinformation; und **gekennzeichnet durch**:
in Antwort auf Kommunikationsnutzung des zweiten Kommunikationsgeräts (331), das eine Benachrichtigungsschwelle relativ zur Definition der Dienstbegrenzung auslöst, Übertragen (633) einer Benachrichtigung an das erste Kommunikationsgerät (333).

2. Verfahren nach Anspruch 1, wobei die Definition der Dienstbegrenzung mindestens eine einer Definition einer geografischen Dienstbegrenzung, einer Definition einer Datenratendienstbegrenzung, einer Definition einer Verwendungszeitdienstbegrenzung, einer Definition einer Datenverwendungsdienstbegrenzung, einer Definition einer Netzwerkzugangsdienstbegrenzung und/oder einer Definition einer Diensttypdienstbegrenzung umfasst.

3. Verfahren nach Anspruch 1, weiter umfassend:
vor Übertragen der Benachrichtigung, Empfangen (609) einer Definition der Benachrichtigungsschwelle von dem ersten Kommunikationsgerät (333).

4. Verfahren zum Betreiben eines ersten Kommunikationsgeräts (333) in einem Kommunikationsnetzwerk, das Verfahren umfassend:
Übertragen (705) einer Anfrage an das Kommunikationsnetzwerk, wobei die Anfrage ist, ein zweites Kommunikationsgerät (331) zu verknüpfen, und wobei die Anfrage eine Identifikation für das zweite Kommunikationsgerät (331) beinhaltet;
Übertragen (709) einer Definition einer Dienstbegrenzung für das zweite Kommunikationsgerät (331), wobei die Definition der Dienstbegrenzung von dem ersten Kommunikationsgerät (333) an das Kommunikationsnetzwerk übertragen wird; und **gekennzeichnet durch**:
Empfangen (723) einer Benachrichtigung vom Kommunikationsnetzwerk, wobei die Benachrichtigung angibt, dass Nutzung des zweiten Kommunikationsgeräts (331) eine Benachrichtigungsschwelle relativ zur Definition der Dienstbegrenzung überschreitet.

5. Verfahren nach Anspruch 4, wobei die Definition der Dienstbegrenzung mindestens eine einer Definition einer geografischen Dienstbegrenzung, einer Definition einer Datenratendienstbegrenzung, einer Definition einer Verwendungszeitdienstbegrenzung, einer Definition einer Datenverwendungsdienstbegrenzung, einer Definition einer Netzwerkzugangsdienstbegrenzung und/oder einer Definition einer Diensttypdienstbegrenzung umfasst.

6. Knoten (335) eines Kommunikationsnetzwerks, wobei der Knoten angepasst ist zum:
Empfangen einer Anfrage von einem ersten Kommunikationsgerät (333), wobei die Anfrage ist, ein zweites Kommunikationsgerät (331) zu verknüpfen, und wobei die Anfrage eine Identifikation für das zweite Kommunikationsgerät (331) beinhaltet;
Empfangen einer Definition einer Dienstbegrenzung für das zweite Kommunikationsgerät (331), wobei die Definition der Dienstbegrenzung von dem ersten Kommunikationsgerät (333) empfangen wird;
Bereitstellen einer Netzwerkzugangsanmeldeinformation für das zweite Kommunikationsgerät (331), in Antwort auf die Anfrage von dem ersten Kommunikationsgerät (333);
Bereitstellen von Kommunikation für das zweite Kommunikationsgerät (331) in Übereinstimmung mit der Definition der Dienstbegrenzung, unter Verwendung der Netzwerkzugangsanmeldeinformation; und **gekennzeichnet durch**:
Übertragen einer Benachrichtigung an das erste Kommunikationsgerät (333), in Antwort auf Kommunikationsnutzung des zweiten Kommunikationsgeräts (331), das eine Benachrichtigungsschwelle relativ zur Definition der Dienstbegrenzung auslöst.

7. Knoten (335) nach Anspruch 6, wobei die Definition der Dienstbegrenzung mindestens eine einer Definition einer geografischen Dienstbegrenzung, einer Definition einer Datenratendienstbegrenzung, einer Definition einer Verwendungszeitdienstbegrenzung, einer Definition einer Datenverwendungsdienstbegrenzung, einer Definition einer Netzwerkzugangsdienstbegrenzung und/oder einer Definition einer Diensttypdienstbegrenzung umfasst.

8. Knoten (335) nach Anspruch 6, wobei der Knoten weiter angepasst ist zum:
Empfangen einer Definition der Benachrichtigungsschwelle von dem ersten Kommunikationsgerät (333), bevor er die Benachrichtigung überträgt.

9. Erstes Kommunikationsgerät (333), das zum Betrieb in einem Kommunikationsnetzwerk angepasst ist, wobei das erste Kommunikationsgerät angepasst ist zum:
Übertragen einer Anfrage an das Kommunikationsnetzwerk, wobei die Anfrage ist, ein zweites Kommunikationsgerät (331) zu verknüpfen, und wobei die Anfrage eine Identifikation für das zweite Kommunikationsgerät (331) beinhaltet;
Übertragen einer Definition einer Dienstbegrenzung für das zweite Kommunikationsgerät (331), wobei die Definition der Dienstbegrenzung von dem ersten Kommunikationsgerät (333) an das Kommunikationsnetzwerk übertragen wird; und **gekennzeichnet durch**:
Empfangen einer Benachrichtigung vom Kommunikationsnetzwerk, wobei die Benachrichtigung angibt, dass Nutzung des zweiten Kommunikationsgeräts (331) eine Benachrichtigungsschwelle relativ zur Definition der Dienstbegrenzung überschreitet.

10. Erstes Kommunikationsgerät (333) nach Anspruch 9, wobei die Definition der Dienstbegrenzung mindestens eine einer Definition einer geografischen Dienstbegrenzung, einer Definition einer Datenratendienstbegrenzung, einer Definition einer Verwendungszeitdienstbegrenzung, einer Definition einer Datenverwendungsdienstbegrenzung, einer Definition einer Netzwerkzugangsdienstbegrenzung und/oder einer Definition einer Diensttypdienstbegrenzung umfasst.

11. Erstes Kommunikationsgerät (333) nach Anspruch 9, wobei das erste Kommunikationsgerät weiter angepasst ist zum:
Übertragen einer Definition der Benachrichtigungsschwelle von dem ersten Kommunikationsgerät (333) an das Kommunikationsnetzwerk, bevor es die Benachrichtigung empfängt.

## Revendications

1. Procédé de fonctionnement d'un nœud de réseau dans un réseau de communication, le procédé comprenant :
la réception (603) d'une demande à partir d'un premier dispositif de communication (333), dans lequel la demande est pour associer un second dispositif de communication (331), dans lequel la demande inclut une identification pour le second dispositif de communication (331) ;
la réception (609) d'une définition d'une limitation de service pour le second dispositif de communication (331), dans lequel la définition de la limitation de service est reçue à partir du premier dispositif de communication (333) ;
en réponse à la demande provenant du premier dispositif de communication (333), la fourniture (619) d'un justificatif d'accès au réseau pour le second dispositif de communication (331) ;
la fourniture (625) d'une communication pour le second dispositif de communication (331) conformément à la définition de la limitation de service en utilisant le justificatif d'accès au réseau ; et **caractérisé par** :
en réponse à une utilisation de communication du second dispositif de communication (331) déclenchant un seuil de notification relatif à la définition de la limitation de service, la transmission (633) d'une notification au premier dispositif de communication (333).

2. Procédé selon la revendication 1, dans lequel la définition de la limitation de service comprend au moins une parmi une définition d'une limitation de service géographique, une définition d'une limitation de service de débit de données, une définition d'une limitation de service de temps d'utilisation, une définition d'une limitation de service d'utilisation de données, une définition d'une limitation de service d'accès au réseau et/ou une définition d'une limitation de service de type de service.

3. Procédé selon la revendication 1, comprenant en outre :
avant la transmission de la notification, la réception (609) d'une définition du seuil de notification à partir du premier dispositif de communication (333).

4. Procédé de fonctionnement d'un premier dispositif de communication (333) dans un réseau de communication, le procédé comprenant :
la transmission (705) d'une demande au réseau de communication, dans lequel la demande est pour associer un second dispositif de communication (331), et dans lequel la demande inclut une identification pour le second dispositif de communication (331) ;
la transmission (709) d'une définition d'une limitation de service pour le second dispositif de communication (331), dans lequel la définition de la limitation de service est transmise depuis le premier dispositif de communication (333) au réseau de communication ; et **caractérisé par** :
la réception (723) d'une notification à partir du réseau de communication, dans lequel la notification indique une utilisation du second dispositif de communication (331) dépassant un seuil de notification relatif à la définition de la limitation de service.

5. Procédé selon la revendication 4, dans lequel la définition de la limitation de service comprend au moins une parmi une définition d'une limitation de service géographique, une définition d'une limitation de service de débit de données, une définition d'une limitation de service de temps d'utilisation, une définition d'une limitation de service d'utilisation de données, une définition d'une limitation de service d'accès au réseau et/ou une définition d'une limitation de service de type de service.

6. Nœud (335) d'un réseau de communication, dans lequel le nœud est adapté pour :
recevoir une demande à partir d'un premier dispositif de communication (333), dans lequel la demande est pour associer un second dispositif de communication (331), et dans lequel la demande inclut une identification pour le second dispositif de communication (331) ;
recevoir une définition d'une limitation de service pour le second dispositif de communication (331), dans lequel la définition de la limitation de service est reçue à partir du premier dispositif de communication (333) ;
fournir un justificatif d'accès au réseau pour le second dispositif de communication (331) en réponse à la demande provenant du premier dispositif de communication (333) ;
fournir une communication pour le second dispositif de communication (331) conformément à la définition de la limitation de service en utilisant le justificatif d'accès au réseau ; et **caractérisé par** :
la transmission d'une notification au premier dispositif de communication (333) en réponse à une utilisation de communication du second dispositif de communication (331) déclenchant un seuil de notification relatif à la définition de la limitation de service.

7. Nœud (335) selon la revendication 6, dans lequel la définition de la limitation de service comprend au moins une parmi une définition d'une limitation de service géographique, une définition d'une limitation de service de débit de données, une définition d'une limitation de service de temps d'utilisation, une définition d'une limitation de service d'utilisation de données, une définition d'une limitation de service d'accès au réseau et/ou une définition d'une limitation de service de type de service.

8. Noeud (335) selon la revendication 6, dans lequel le nœud est adapté en outre pour :
recevoir une définition du seuil de notification à partir du premier dispositif de communication (333) avant la transmission de la notification.

9. Premier dispositif de communication (333) adapté pour un fonctionnement dans un réseau de communication, dans lequel le premier dispositif de communication est adapté pour :
transmettre une demande au réseau de communication, dans lequel la demande est pour associer un second dispositif de communication (331), dans lequel la demande inclut une identification pour le second dispositif de communication (331) ;
transmettre une définition d'une limitation de service pour le second dispositif de communication (331), dans lequel la définition de la limitation de service est transmise du premier dispositif de communication (333) au réseau de communication ; et **caractérisé par** :
la réception d'une notification à partir du réseau de communication, dans lequel la notification indique une utilisation du second dispositif de communication (331) dépassant un seuil de notification relatif à la définition de la limitation de service.

10. Premier dispositif de communication (333) selon la revendication 9, dans lequel la définition de la limitation de service comprend au moins une parmi une définition d'une limitation de service géographique, une définition d'une limitation de service de débit de données, une définition d'une limitation de service de temps d'utilisation, une définition d'une limitation de service d'utilisation de données, une définition d'une limitation de service d'accès au réseau et/ou une définition d'une limitation de service de type de service.

11. Premier dispositif de communication (333) selon la revendication 9, dans lequel le premier dispositif de communication est adapté en outre pour :
transmettre une définition du seuil de notification du premier dispositif de communication (333) au réseau de communication avant la réception de la notification.
